# EUROPÄISCHE PATENTANMELDUNG

(11) **EP 3 698 931 A1**
(43) Veröffentlichungstag der Anmeldung: **26.08.2020**
(21) Anmeldenummer: 19158177.6
(22) Anmeldetag: 20.02.2019
(51) Int. Cl.: B28D 7/02, B23Q 11/00

(54) **HOHLBOHRERVORRICHTUNG MIT EINER ANZEIGE UND VERFAHREN UND SYSTEM ZUR BESTIMMUNG UND ANZEIGE EINES GÜTEGRADES FÜR EINE BOHRLOCHREINIGUNG**

(71) Anmelder: Hilti Aktiengesellschaft, 9494 Schaan (LI)
(72) Erfinder: Ohlendorf, Oliver, 86899 Landsberg (DE)
(74) Vertreter: Hilti Aktiengesellschaft Corporate Intellectual Property

(57) **Zusammenfassung**

Die vorliegende Erfindung betrifft eine Hohlbohrervorrichtung (1) zur Erzeugung eines Bohrlochs, wobei die Hohlbohrervorrichtung (1) einen Saugkopf (2) zur Verbindung der Hohlbohrervorrichtung (1) mit einer Staubabsaugevorrichtung umfasst, und wobei die Hohlbohrervorrichtung (1) eine Anzeige (4) umfasst, mit der ein Gütegrad einer Reinigung des Bohrlochs angezeigt werden kann. Ferner betrifft die Erfindung ein System, das eine Hohlbohrervorrichtung und ein externes System umfasst und mit dem ein Bohrlochreinigungs-Gütegrad anzeigbar ist. In einem weiteren Aspekt betrifft die Erfindung ein Verfahren zur Bestimmung und Anzeige eines Gütegrades für eine Bohrlochreinigung.

## Beschreibung

Die vorliegende Erfindung betrifft eine Hohlbohrervorrichtung zur Erzeugung eines Bohrlochs, wobei die Hohlbohrervorrichtung eine Anzeige umfasst, mit der ein Gütegrad einer Reinigung des Bohrlochs angezeigt werden kann. Ferner betrifft die Erfindung ein System, das eine Hohlbohrervorrichtung und ein externes Gerät umfasst und mit dem ein Bohrlochreinigungs-Gütegrad anzeigbar ist. In einem weiteren Aspekt betrifft die Erfindung ein Verfahren zur Bestimmung und Anzeige eines Gütegrades für eine Bohrlochreinigung.

Es sind im Stand der Technik Bohrvorrichtungen bekannt, die zum Erzeugen von Bohrlöchern in teilweise sehr hartem Untergrund, wie beispielsweise Beton, geeignet sind. Diese Bohrvorrichtungen arbeiten mit Bohrwerkzeugen, die sich in das zu durchbohrende Material hineinarbeiten und dadurch das zumeist runde Bohrloch zu erzeugen. Die Bohrvorrichtungen können mit konventionellen, massiven Bohrwerkzeugen ausgestattet sein. Es können aber auch hohle Bohrwerkzeuge verwendet werden, die beispielsweise als *«hollow drilling bits»* bezeichnet werden. Bei der Verwendung der sogenannten *«hollow drilling bits»* kann das bei der Bohrlocherzeugung anfallende zerkleinerte Material durch Öffnungen innerhalb des hohlen Bohrwerkzeugs aus dem Bohrloch abgeführt werden, indem es mit einem Unterdruck aus dem Bohrloch herausgesaugt wird. Das Bohrwerkzeug bzw. die damit verbundene Bohrvorrichtung kann dazu mit einer Staubabsaugvorrichtung verbunden sein, die in bekannter Weise einen Unterdruck erzeugt. Der Unterdruck wird dabei so eingestellt, dass ein ausreichend großer Absaugvolumenstrom erzeugt wird, um den Staub und das zerkleinerte Material aus dem Bohrloch abzusaugen.

Bei der Verwendung von konventionellen, massiven Bohrwerkzeugen muss der Bediener der Bohrvorrichtung aufwändige Maßnahmen ergreifen, um nach der Erzeugung des Bohrloches Staub und zerkleinertes Material aus dem Bohrloch herauszuarbeiten. Diese Maßnahmen bestehen je nach gesetzlicher oder anderer Vorgabe beispielsweise darin, das erzeugte Bohrloch mit einem Luftstrom mehrmals zu spülen und/oder mit einer Bürste mehrmals auszuwischen. Ein optimal gereinigtes Bohrloch ist anzustreben, um eine gute Befestigungswirkung bzw. eine stabile Verbindung zwischen dem Untergrundmaterial und dem Befestigungsmaterial, wie beispielsweise Dübel und/oder Anker, in dem erzeugten Bohrloch zu gewährleisten.

Es hat sich gezeigt, dass die Stärke bzw. die Größe des Absaugvolumenstroms, mit dem Staub und zerkleinertes Material aus dem Bohrloch abgesaugt wird, von verschiedenen Faktoren abhängen kann, so dass es für den Bediener in einigen Fällen schwierig ist zu erkennen, ob zu jedem Zeitpunkt des Betriebs der Bohrvorrichtung eine optimale Bohrlochreinigung durch das System aus Bohrvorrichtung, Bohrwerkzeug und Staubabsaugevorrichtung erreicht wird. Bei den verschiedenen Faktoren, die die Güte der Bohrlochreinigung beeinflussen können, handelt es sich insbesondere um variable Umgebungsbedingungen im Umfeld des zu erzeugenden Bohrlochs, beispielsweise um die Art der verwendeten Staubabsaugevorrichtung, die Art des verwendeten Schlauches, um den Zustand des Filters in der Staubabsaugevorrichtung oder um den Durchmesser des hohlen Bohrwerkzeugs bzw. um die Größe und die Anzahl der Öffnungen des hohlen Bohrwerkzeugs. Auch die Tiefe des Bohrlochs, die Leistungsklasse des verwendeten Saugers oder der Absaugquerschnitt können eine Rolle spielen. Insbesondere können Situationen auftreten, in denen dem Bediener oder dem Anwender des Bohrsystems aus Bohrvorrichtung, Bohrwerkzeug und Staubabsaugevorrichtung Informationen fehlen, um abschätzen zu können, ob aktuell eine ausreichend gute Bohrlochreinigung erfolgt. Insbesondere die auf den Bediener einwirkende große Anzahl von Faktoren macht die Bewertung des Bohrlochzustands in Bezug auf seinen Reinigungsgrad für den Bediener schwierig; dies insbesondere auch deswegen, weil häufig nicht klar ist, wie die einzelnen Faktoren miteinander zusammenhängen bzw. wie sich diese gegenseitig beeinflussen bzw. in Wechselwirkung zueinanderstehen.

Aufgabe der vorliegenden Erfindung ist es somit, die vorstehend beschriebenen Nachteile konventioneller Hohlbohrervorrichtungen zu überwinden und eine Hohlbohrervorrichtung bereitzustellen, bei der der Bediener auf einfache Art und Weise schnell und unaufwändig erkennen kann, ob der Reinigungsgrad des Bohrlochs in einem akzeptablen Bereich liegt und ob keine weiteren Maßnahmen zur Bohrlochreinigung ergriffen werden müssen. Besonders wünschenswert wäre es, wenn der Anwender eine rasch zu erfassende, objektive und belastbare Rückmeldung über den Reinigungszustand des Bohrlochs erhalten könnte, und zwar direkt während der Bohrlocherzeugung, also unmittelbar beim Bohren des Loches.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

Die Aufgabe wird gelöst durch eine Hohlbohrervorrichtung zur Erzeugung eines Bohrlochs, wobei die Hohlbohrervorrichtung einen Saugkopf zur Verbindung der Hohlbohrervorrichtung mit einer Staubabsaugevorrichtung umfasst. Die Hohlbohrervorrichtung ist dadurch gekennzeichnet, dass sie eine Anzeige umfasst, wobei die Anzeige dazu eingerichtet ist, einen Gütegrad einer Bohrlochreinigung anzuzeigen, wobei die Hohlbohrervorrichtung einen Sensor zur Ermittlung von Druckverhältnissen im Saugkopf umfasst und die Anzeige den Gütegrad der Bohrlochreinigung in Abhängigkeit von ermittelten Druckwerten im Saugkopf anzeigt. Mit der Erfindung wird insbesondere eine einfache und intuitive Anzeige der aktuellen Bohrlochreinigungsqualität gewährleistet und eine erhöhte Sicherheit von Dübelanwendungen ermöglicht. Ein besonderer Vorteil der Erfindung besteht darin, dass der Bediener der vorgeschlagenen Hohlbohrervorrichtung schnell, einfach und leicht zu erfassend eine Rückmeldung über die Qualität der Reinigung des erzeugten Bohrlochs erhält.

Es ist im Sinne der Erfindung bevorzugt, die vorgeschlagene Anzeige als "unterdruckgesteuerte Anzeige" zu bezeichnen, da die Anzeige der unterschiedlichen Gütegrade der Bohrlochreinigung in Abhängigkeit von den Druckverhältnissen innerhalb des Saugkopfes der Hohlbohrervorrichtung erfolgt. Der Begriff "Druckverhältnisse" bezeichnet im Sinne der Erfindung vorzugsweise den Druck, der im Saugkopf bei Betrieb der Hohlbohrervorrichtung herrscht. Hierbei handelt es sich insbesondere um einen Unterdruck, da die Staubabsaugevorrichtung vorzugsweise unter Verwendung von Unterdruck Staub und Verunreinigungen ansaugt, um den Staub durch das Saugrohr in das Innere der Staubabsaugevorrichtung einzusaugen. Der Begriff "Unterdruck" bezeichnet insbesondere einen solchen Druck, der kleiner ist als der übliche Atmosphärendruck bzw. der Druck der Umgebung, in der die Hohlbohrervorrichtung betrieben wird. Insofern ist es im Sinne der Erfindung insbesondere bevorzugt, dass die Anzeige die Güte der Bohrlochreinigung in Abhängigkeit von ermittelten Unterdruckwerten im Saugkopf angibt.

Es ist im Sinne besonders bevorzugt, dass die Hohlbohrervorrichtung insbesondere im Bereich des Saugkopfes den Sensor zur Ermittlung der Druckverhältnisse in der Hohlbohrervorrichtung umfasst bzw. dass der Sensor in räumlicher Nähe zum Saugkopf der Hohlbohrervorrichtung angeordnet vorliegt. In einer bevorzugten Ausführungsform der Erfindung ist die Anzeige für die Bohrlochreinigungsqualität auf dem Saugkopf angeordnet. Die Anordnung der Anzeige auf einer Oberseite des Saugkopfes ist besonders vorteilhaft, weil die Anzeige damit unmittelbar im Sichtfeld des Bedieners der Hohlbohrervorrichtung liegt und vom Bediener im Blick gehabt werden kann, ohne seinen Kopf vom Bohrloch wegzudrehen. Insbesondere wird durch die vorgeschlagene Anordnung der Anzeigenvorrichtung eine optimale Sichtbarkeit beim Bohrvorgang erreicht. Bei dem Sensor kann es sich vorzugsweise um einen elektronischen Drucksensor handeln. Der Drucksensor ist vorzugsweise dazu eingerichtet, die ermittelten Druckverhältnisse bzw. die daraus abgeleiteten Bohrlochreinigungsqualitätsdaten an die Anzeige der Hohlbohrervorrichtung zu übermitteln. Wenn die Hohlbohrervorrichtung mit einem externen Gerät, wie einer mobilen Kommunikationsvorrichtung, zusammenwirkt, kann es auch bevorzugt sein, dass die ermittelten Druckverhältnisse bzw. die daraus abgeleiteten Bohrlochreinigungsqualitätsdaten unter Verwendung des vorzugsweise elektronischen Drucksensors an das externe Gerät übermittelt werden. Die erhobenen Daten können dann mit einer Anzeigenvorrichtung des externen Empfängergeräts angezeigt werden. Vorzugsweise bildet die Datenübermittlung zwischen der Hohlbohrervorrichtung und dem externen Gerät eine Kommunikationsverbindung, die vorzugsweise Bestandteil des Systems aus Hohlbohrervorrichtung und externem Gerät ist. Diese Kommunikationsverbindung arbeitet vorzugsweise unter Verwendung des vorzugsweise elektronischen Drucksensors.

Es kann im Sinne der Erfindung auch bevorzugt sein, dass die vorzugsweise visuelle Anzeigenvorrichtung im Bereich oder als Bestandteil des Absaugkörpers ausgebildet ist. Der vorliegenden Erfindung liegt die Erkenntnis zugrunde, dass die Güte einer Bohrlochreinigung, die im Sinne der Erfindung bevorzugt auch als Bohrlochreinigungseffizienz bezeichnet wird, mit den Druckverhältnissen im Saugkopf der Hohlbohrervorrichtung zusammenhängt. Die Erkennung dieser Korrelation ermöglicht es vorteilhafterweise, den Druck innerhalb des Saugkopfes mit einem Sensor zu ermitteln und die so ermittelten Druckwerte zur Bestimmung der Qualität der Reinigung des Bohrlochs zu verwenden. Es ist im Sinne der Erfindung insbesondere bevorzugt, die Erfindung als visuelle Anzeige einer Bohrlochreinigungseffizienz zu bezeichnen.

Insbesondere wurde im Kontext der Erfindung erkannt, dass der statische Druck im Saugkopf im Wesentlichen direkt proportional ist zu einem Absaugvolumenstrom. Der Begriff "Absaugvolumenstrom" bezeichnet im Sinne der Erfindung vorzugsweise denjenigen Luftstrom, mit dem unter Verwendung von Unterdruck Staub aus einem Bohrloch abgesaugt werden kann, wenn beim Bohren ein hohles Bohrwerkzeug verwendet wird. Ein solches hohles Bohrwerkzeug kann vorzugsweise in seinem vorderen Bereich, wo der Kontakt mit dem zu durchbohrenden Material erfolgt, mit Öffnungen ausgestattet sein, wobei diese Öffnungen durch eine Staubabsaugevorrichtung mit einem Unterdruck beaufschlagt werden können. Durch den Unterdruck wird der beim Bohren entstehende Staub durch die Öffnungen in das hohle Bohrwerkzeug hineingesaugt und durch das Werkzeug, den Saugkopf und das Absaugrohr hindurch in das Innere der Staubabsaugevorrichtung befördert, wo es in einem Sammelbehälter aufbewahrt wird. Der Begriff "im Wesentlichen proportional" ist für den Fachmann kein unklarer Begriff, weil der Fachmann weiß, dass hier keine strenge Proportionalität im Sinne eines konstanten, für alle Wertepaare gleichbleibenden Proportionalitätsfaktors gemeint ist, sondern eine Korrelation, bei der der Zusammenhang zwischen ermittelten Unterdruck und Absaugvolumenstrom im Wesentlichen einen linearen Verlauf einnimmt, wobei die Steigung der Gerade für unterschiedliche Druck- und Volumenpaare in einem gewissen Bereich unterschiedliche Werte annehmen kann.

Es ist im Sinne der Erfindung bevorzugt, dass zur Realisierung der Erfindung ein besonders kostengünstiges Element, beispielsweise ein Tubus mit Feder, verwendet werden kann. Der Tubus kann beispielsweise als vorzugsweise elastische Membran ausgeführt sein, wobei die vorzugsweise elastische Membran durch die Druckdifferenz im Saugkopf je nach Größe der Druckdifferenz ausgelenkt werden kann. Vorzugsweise wird eine Auslenkungshöhe der Membran durch die ermittelten Druckwerte im Saugkopf bestimmt, wobei die Auslenkungshöhe der Membran vorteilhafterweise dazu verwendet werden kann, die vorzugsweise farbigen Druckstufen bzw. die Bohrlochreinigungsgütegrade anzugeben. Mit anderen Worten wird die Auslenkung der bevorzugt elastischen Membran vorzugsweise von den Druckverhältnissen, insbesondere den Druckdifferenzen bzw. dem Absaugevolumenstrom im Saugkopf, festgelegt.

Es wurde im Kontext der vorliegenden Erfindung erkannt, dass der Absaugevolumenstrom vorzugsweise die Absaugqualität im Bereich der Bohrlochwandung bestimmt. Insbesondere wurde gefunden, dass ein höherer Absaugvolumenstrom zu einer verbesserten Reinigung der Bohrlochwandung führt. Ein wesentlicher Vorteil der Erfindung besteht darin, dass der Bediener der Hohlbohrervorrichtung mit der vorgeschlagenen Anzeige eine Rückmeldung der vorgeschlagenen Vorrichtung darüber erhält, ob die Reinigung des Bohrlochs beim Bohren ausreichend ist, um von weiteren Maßnahmen zur Reinigung des Bohrlochs nach dessen Fertigstellung absehen zu können. Ein optimal gereinigtes Bohrloch führt zu höheren Dübelauszugkräften, so dass eine verbesserte Befestigungsqualität erreicht werden kann, wenn ausreichend saubere Bohrlöcher verwendet werden, um Befestigungsmörtel oder die Grundmasse für einen chemischen Dübel aufzunehmen. Somit erhöht die Erfindung vorteilhafterweise die Sicherheit der mit dem Bohrloch erzeugten Befestigung bzw. des damit gebauten Gebäudes. Außerdem kann die Stabilität der Befestigung durch Anwendung der Erfindung wirksam erhöht werden.

Es ist im Sinne der Erfindung bevorzugt, dass die Hohlbohrervorrichtung Mittel umfasst, damit die im Saugkopf ermittelten Druckwerte an die Anzeige übermittelt werden. Die Übermittlung dieser Daten kann drahtlos oder drahtbehaftet erfolgen. Beispielsweise können die Daten mit einem Datenkabel innerhalb der Vorrichtung vom Drucksensor an die Anzeigenvorrichtung übertragen werden. Es kann allerdings für einige Anwendungen auch bevorzugt sein, dass drahtlose Kommunikationsmittel für die Datenübertragung verwendet werden. Vorzugsweise umfasst die Hohlbohrervorrichtung Mittel zur Auswertung der im Saugkopf ermittelten Druckwerte. Dabei kann es sich beispielsweise um einen Prozessor, Mikroprozessor oder eine sonstige Auswerteeinheit handeln, die vorzugsweise dazu eingerichtet sind, die ermittelten Druckwerte einem Absaugevolumentstrom zuzuordnen und daraus eine Absaugequalität bzw. eine Bohrlochreinigungseffizienz abzuleiten. Dies kann beispielsweise erfolgen, indem die ermittelten Druckwerte und/oder der ermittelte Wert für den Absaugevolumentstrom mit vordefinierten Referenzwerten, die beispielsweise in einer Datenbank hinterlegt sein können, verglichen werden. Beispielsweise können einzelnen Wertebereichen unterschiedliche Gütegrade, wie "gut", "ausreichend" und "es besteht Handlungsbedarf", zugeordnet werden. Diese unterschiedlichen Gütegrade können, beispielsweise unter Verwendung eines Ampel-Farbensystems, von der Anzeige angezeigt werden. Es ist mit anderen Worten ganz besonders bevorzugt, dass unterschiedliche Gütegrade der Bohrlochreinigung mit unterschiedlichen Farben angezeigt werden.

Es ist im Sinne der Erfindung bevorzugt, dass die Anzeige eine optische Anzeige ist. Vorzugsweise kann der Gütegrade "gut" für die Bohrlochreinigung mit der Farbe "grün" gekennzeichnet werden, während beispielsweise der Gütegrade "ausreichend" mit der Farbe "gelb" und der Gütegrade "es besteht Handlungsbedarf" mit der Farbe rot gekennzeichnet werden. Die Anzeige kann beispielsweise auch so ausgestaltet sein, dass zwei unterschiedliche Gütegrade für die Bohrlochreinigung unterschieden und angezeigt werden. Beispielsweise kann ein erster Gütegrad darin bestehen, dass die Bohrlochreinigungseffizienz den Anforderungen an eine zufriedenstellende Bohrlochreinigung erfüllt, wobei dieser Zustand beispielsweise durch die Abgabe eines grünen Farbsignals markiert werden könnte. Ein zweiter Gütegrad kann beispielsweise darin bestehen, dass die Anforderungen an eine ausreichende Bohrlochreinigung nicht erfüllt sind. Dieser zweite Gütegrad kann beispielsweise mit einem in der Signalfarbe rot gehaltenen Farbsignal gekennzeichnet werden. Dieser zweite Gütegrad "rot" kann beispielsweise auch anzeigen oder bedeuten, dass der Hohllochbohrer verstopft ist. Vorzugsweise ist die Verwendung der Farbe "rot" im Kontext der vorliegenden Erfindung so zu verstehen, dass dem Anwender gezeigt wird, das die Bohrlochreinigung nicht optimal ist und das Handlungsbedarf besteht. In dieser Ausführungsform der Erfindung mit zwei unterschiedlichen Bohrlochreinigungsgütegraden kann die Anzeigenvorrichtung insbesondere als "binäre Anzeige" bezeichnet werden. Es ist im Sinne der Erfindung insbesondere bevorzugt, dass die Anzeigenvorrichtung ihre Farbe wechselt, wenn beispielsweise ein zuvor festgelegtes oder vordefiniertes Unterdruckniveau unterschritten wird. Insofern korreliert die angezeigte Farbe vorzugsweise mit den ermittelten Druckwerten und/oder den daraus abgeleiteten Absaugstromvolumenwerten, was im Kontext der vorliegenden Erfindung als Anzeige der Bohrlochreinigungsqualität "in Abhängigkeit von ermittelten Druckwerten" bezeichnet wird.

Es ist im Sinne der Erfindung besonders bevorzugt, dass die Anzeige direkt im Sichtbereich des Bedieners der Hohlbohrervorrichtung angeordnet wird, damit der Bediener die Anzeige während der Arbeit im Blick haben kann. Insbesondere muss der Bediener den Blick nicht vom Bohrloch abwenden, wenn er die Anzeige erkennen möchte und gleichzeitig die Hohlbohrervorrichtung bedient. Es ist im Sinne der Erfindung bevorzugt, dass die Anzeigenvorrichtung eine geringe Größe aufweist, so dass sie den Bediener vorteilhafterweise nicht von der Arbeit ablenkt oder ihm den Blick versperrt. Es ist im Sinne der Erfindung insbesondere bevorzugt, dass die unterdruckgesteuerte Anzeigenvorrichtung in oder an einem Saugkopf der Hohlbohrer-Absaugung angeordnet bzw. platziert wird. Mit der Erfindung kann vorteilhafterweise eine Anwenderunterstützung bereitgestellt werden, mit der die Sicherheit und Stabilität einer Verbindung zwischen einem chemischen Anker und einem Bohrloch verbessert werden kann, indem der Bediener der Hohlbohrervorrichtung zu jedem Zeitpunkt des Betriebs der Vorrichtung einfach erkennen kann, ob die Bohrlochreinigung während des Bohrens ausreichend gut ist oder nicht. Insbesondere ermöglicht die Erfindung eine Überwachung bzw. ein Monitoring der Bohrlochreinigung, beispielsweise wenn die mit dem Sensor ermittelten Druckwerte oder die mit der Auswerteeinheit ausgewerteten Daten für den Absaugevolumenstrom gespeichert werden. Die Daten können dann zu einem späteren Zeitpunkt ausgelesen und/oder zu Dokumentationszwecken verwertet werden.

Die vorgeschlagene Erfindung betrifft insbesondere auch die Anzeigenvorrichtung, wobei die Anzeigenvorrichtung beispielsweise auf einem Saugkopf einer Hohlbohrervorrichtung angebracht vorliegen kann. Diese Anzeigenvorrichtung kann vorzugsweise auch als Kontrollanzeige bezeichnet werden. Es ist im Sinne der Erfindung ganz besonders bevorzugt, dass die Anzeige beispielsweise mit einer Farbe anzeigen kann, dass die Bohrlochreinigung unzureichend ist. In diesem Fall müsste der Bediener nach dem Bohren des Loches die Maßnahmen durchführen, die bei Verwendung einer konventionellen Bohrvorrichtung ohne Hohlbohrwerkzeugt erforderlich sind, um das Bohrloch zu reinigen und für weitere Befestigungsarbeiten vorzubereiten. Diese Maßnahmen bestehen insbesondere darin, das erzeugte Bohrloch mit einem Luftstrom mehrmals zu spülen und mit einer Bürste auszuwischen.

Zur Anzeige der unterschiedlichen Gütegrade kann die Anzeige beispielsweise Leuchtmittel umfassen, wobei die Leuchtmittel dazu eingerichtet sind, Licht in unterschiedlicher Farbe, d.h. mit unterschiedlichen Wellenlängen bzw. Frequenzen, abzugeben. Dazu kann die Anzeigenvorrichtung entweder ein Leuchtmittel umfassen, dass "weißes" Licht abgibt, das mit unterschiedlichen Filtern eingefärbt wird. Es kann alternativ auch bevorzugt sein, dass die Anzeige verschiedene Leuchtmittel umfasst, die Licht in unterschiedlichen Farben abgeben. In einer besonderen Ausgestaltung der Erfindung kann die Anzeige auch dazu eingerichtet sein, in Intervallen zu blinken, wobei beispielsweise unterschiedliche Blinkfrequenzen unterschiedliche Gütegrade der Bohrlochreinigung markieren können.

In einem zweiten Aspekt betrifft die Erfindung ein System, das eine Hohlbohrervorrichtung und eine mobile Kommunikationsvorrichtung als externes Gerät umfasst. Bei der mobilen Kommunkationsvorrichtung kann es sich um ein Smart- oder Mobiltelefon, ein Notebook, ein Laptop, ein *handheld device,* ein Tablet oder dergleichen handeln, ohne darauf beschränkt zu sein. Insbesondere umfasst die mobile Kommunikationsvorrichtung eine Anzeigeneinrichtung, wie beispielsweise einen Bildschirm, einen Berührbildschirm, einen Monitor oder ein Display, wobei die mobile Kommunikationsvorrichtung dazu eingerichtet ist, die Anzeigenfunktion der Anzeige der vorgeschlagenen Hohlbohrervorrichtung zu übernehmen. Dazu können die im Saugkopf ermittelten Druckwerte mit einer drahtlosen oder drahtbehafteten Kommunikationsvorrichtung an die mobile Kommunikationsvorrichtung übertragen werden. Bevorzugt ist insbesondere eine drahtlose Kommunikationsverbindung, beispielsweise basierend auf Bluetooth oder WIFI/WLAN. Mit anderen Worten ist es im Sinne der Erfindung bevorzugt, dass das System eine Kommunikationsverbindung zwischen der Hohlbohrervorrichtung und dem mindestens einen externen Gerät umfasst. Vorzugsweise ist die Kommunikationsverbindung dazu eingerichtet, die von dem Sensor der Hohlbohrervorrichtung ermittelten Druckwerte bzw. die daraus abgeleiteten Bohrlochreinigungsgütegrade an das mindestens eine externe Gerät zu übermitteln, so dass diese Daten von dem externen Gerät unter Verwendung einer Anzeigenvorrichtung dargestellt werden können. Beispielsweise kann die aktuelle Bohrlochreinigungsqualität auf der mobilen Kommunikationsvorrichtung im Rahmen einer App angezeigt werden. Dazu kann die App entsprechende Bedien- und/oder Anzeigen-Oberflächen umfassen. Auch eine Anzeige der ermittelten Druckwerte bzw. der daraus abgeleiteten Bohrlochreinigungseffizienz an der Staubabsaugevorrichtung kann im Rahmen der vorliegenden Erfindung vorgesehen sein. Insbesondere betrifft die Erfindung in diesem Aspekt der Erfindung ein System umfassend eine Hohlbohrervorrichtung mit Saugkopf und ein externes Gerät, wobei das externe Gerät eine Anzeige umfasst, wobei die Anzeige dazu eingerichtet ist, einen Gütegrad einer Bohrlochreinigung anzuzeigen, wobei die Hohlbohrervorrichtung einen Sensor zur Ermittlung von Druckverhältnissen im Saugkopf umfasst und die Anzeige den Gütegrad der Bohrlochreinigung in Abhängigkeit von ermittelten Druckwerten im Saugkopf anzeigt. Das externe Gerät - beispielsweise ein Smart- oder ein Mobiltelefon - können in Bezug auf den Bediener der Hohlbohrervorrichtung so aufgestellt oder angeordnet sein, dass der Bediener deren Anzeigeneinrichtung gut im Blick hat, während die Hohlbohrervorrichtung in Betrieb ist. So hat der Bediener der Hohlbohrervorrichtung die Bohrlochreinigungsqualität stets gut im Blick und kann erforderlichenfalls entsprechende Maßnahmen ergreifen. Bei der mobilen Kommunikationsvorrichtung Das externe kann vorzugsweise auch von der Staubabsaugevorrichtung selbst gebildet werden. Dazu verfügt die Staubabsaugevorrichtung vorzugsweise über eine Anzeigeneinrichtung und ist vorzugsweise dazu eingerichtet, den Gütegrad einer Bohrlochreinigung anzuzeigen.

In einem weiteren Aspekt betrifft die Erfindung ein Verfahren zur Bestimmung und Anzeige eines Gütegrades für eine Bohrlochreinigung, wobei das Verfahren die folgenden Schritte umfasst:
a) Bereitstellung einer Hohlbohrervorrichtung, wobei die Hohlbohrervorrichtung einen Sensor zur Ermittlung eines Drucks in einem Saugkopf umfasst,
b) Messung des Druck innerhalb des Saugkopfs,
c) Anzeige eines Gütegrades einer Bohrlochreinigung durch eine Anzeige.

Die für die Hohlbohrervorrichtung eingeführten Begriffe, Definitionen und technischen Vorteile gelten für das vorgeschlagene Verfahren zur Bestimmung und Anzeige eines Gütegrades für eine Bohrlochreinigung analog. Vorzugsweise ist der Sensor insbesondere im Saugkopf der Hohlbohrervorrichtung angeordnet. Bei dem Sensor handelt es sich vorzugsweise um einen Drucksensor, der vorzugsweise ein elektronischer Drucksensor sein kann. Bei dem Druck, der mit dem Sensor ermittelt wird, handelt es sich vorzugsweise um einen Unterdruck, der zum Einsaugen des zerkleinerten Bohrmaterials bzw. von Staub verwendet wird. Nach der Messung der Druckwerte werden diese vorzugsweise an die Anzeige übermittelt, wobei beispielsweise drahtlose oder drahtbehaftete Kommunikations- oder Datenübertragungsmittel verwendet werden können. Insbesondere erfolgt die Messung des Drucks und auch die Anzeige der abgeleiteten Gütegrade der Bohrlochreinigung während des Betriebs der Hohlbohrervorrichtung, wobei die angezeigten Gütegrade jeweils an die aktuellen Messwerte und/oder Auswertungsergebnisse angepasst werden. Dadurch wird es vorteilhafterweise erreicht, dass der Bediener stets optimal hinsichtlich der aktuell erreichten Qualität der Bohrlochreinigung unterrichtet ist. Das vorgeschlagene Verfahren kann ferner die Auswertung der im Saugkopf ermittelten Druckwerte umfassen, wobei diese Auswertung beispielsweise mit einer Auswerteeinheit erfolgen kann. Vorzugsweise kann durch die Auswertung der Druckmesswerte ein Gütegrad für die Bohrlochreinigung hergeleitet bzw. bestimmt werden.

Die Anzeige kann Bestandteil der Hohlbohrervorrichtung oder extern angeordnet sein. Die Formulierung der "externen Anordnung" umfasst beispielsweise die Anzeige der ermittelten Druckwerte bzw. die Anzeige der daraus abgeleiteten Bohrlochreinigungseffizienz auf einer mobilen Kommunikationsvorrichtung oder auf einer Anzeigeneinrichtung eines externen Geräts. Beispielsweise kann die Bohrlochreinigungsgüte auf einer Bedien- und/oder Anzeigen-Oberfläche einer App, die auf einem Smart- oder Mobiltelefon betrieben wird, angezeigt werden. Auch eine Anzeige der ermittelten Druckwerte bzw. der daraus abgeleiteten Bohrlochreinigungsgüte auf der Staubabsaugevorrichtung kann im Rahmen der Erfindung vorgesehen sein. Dazu umfasst die Staubabsaugevorrichtung eine geeignete Anzeigeneinrichtung. Vorzugsweise können die ermittelten Druckwerte bzw. die daraus abgeleiteten Bohrlochreinigungseffizienzdaten mit einer Kommunikationsverbindung zwischen der Hohlbohrervorrichtung und dem externen Gerät übertragen werden.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: Ansicht einer bevorzugten Ausgestaltung der Erfindung, insbesondere einer vorgeschlagenen Hohlbohrervorrichtung
- Fig. 2: Ansicht einer bevorzugten Ausgestaltung der Erfindung, insbesondere eines vorgeschlagenen Systems

### Ausführungsbeispiele:

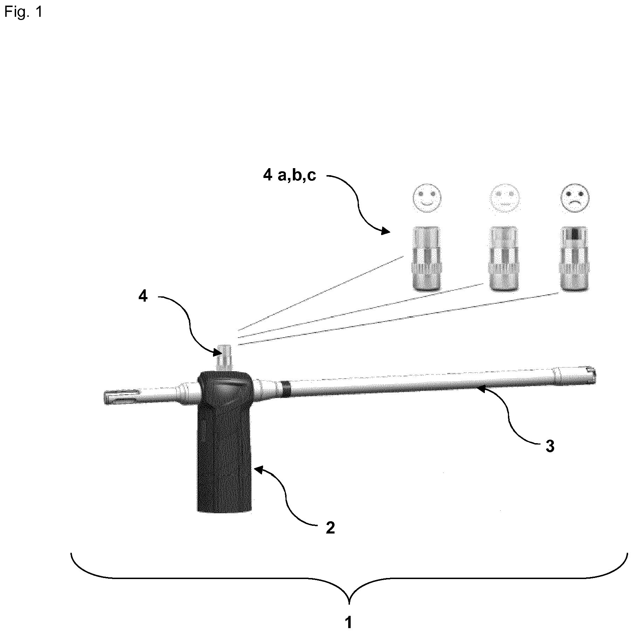

Figur 1 zeigt eine bevorzugte Ausgestaltung einer vorgeschlagenen Hohlbohrervorrichtung (1). Dargestellt ist ein Bohrwerkzeug (3), bei dem es sich insbesondere um ein «*hollow drill bit*» handeln kann. Das Bohrwerkzeug (3) ist mit einem Saugkopf (2) verbunden, der wiederum mit einer Staubabsaugevorrichtung verbindbar ist. Durch das hohle Bohrwerkzeug (3) können Staub und Verunreinigungen mit der Staubabsaugevorrichtung aus dem Bohrloch herausgesaugt werden. Kern der vorliegenden Erfindung ist eine Anzeige (4), die beispielsweise im Bereich des Saugkopfes (2) an der Hohlbohrervorrichtung (1) angeordnet sein kann. Im in Figur 1 dargestellten Ausführungsbeispiel der Erfindung ist die Anzeigenvorrichtung (4) auf einer Kopf- oder Oberseite des Saugkopfes (2) angeordnet, damit die Anzeige (4) möglichst leicht vom Bediener der Hohlbohrervorrichtung (1) im Blick gehabt werden kann, während der Bediener mit der Hohlbohrervorrichtung (1) ein Loch bohrt. Mit anderen Worten befindet sich die Anzeige (4) im Ausführungsbeispiel der Figur 1 im Blickfeld des Bedieners.

Die Anzeige (4) in Figur 1 ist als optische Anzeige ausgeführt, wobei unterschiedliche Farben vorzugsweise für unterschiedliche Gütegrade der Bohrlochreinigung stehen. Beispielsweise kann eine grüne Anzeige (4a, links im Bild) für eine ausreichende Bohrlochreinigung stehen, bei der keine zusätzlichen Reinigungsmaßnahmen für das Bohrloch erforderlich sind und auch ohne diese eine gute Verbindung zwischen Befestigungssystem und Bohrloch zu erwarten ist. Eine rote Anzeige (4c, rechts im Bild) kann beispielsweise für eine unzureichende Bohrlochreinigung stehen, bei der weitere Maßnahmen zur verbesserten Reinigung des Bohrlochs oder Maßnahmen gegen einen gegebenenfalls verstopften Hohlbohrer durchgeführt werden müssen, um sicherzustellen, dass beispielsweise ein chemischer Dübel gut in dem Bohrloch verankert werden kann. Eine gelbe Anzeige (4b, mittig im Bild) kann beispielsweise für eine kritische oder gegebenenfalls mangelhafte Bohrlochreinigung stehen. Es kann insbesondere auch der Fall sein, dass eine gelbe Anzeige (4b) eine Veränderung von einer guten Bohrlochreinigung zu einer schlechten Bohrlochreinigung anzeigt, oder umgekehrt. Auf diese Weise kann der Bediener der Hohlbohrervorrichtung (1) von möglichen Änderungen der Umgebungsbedingungen und Faktoren, die die Güte der Bohrlochreinigung beeinflussen, Kenntnis erlangen und gegebenenfalls für Abhilfe sorgen.

Es kann aber im Sinne der Erfindung auch bevorzugt sein, dass die Anzeige (4) an einer anderen Stelle des Saugkopfes (2) angeordnet ist. Beispielsweise kann die Anzeige (4) auch als Display oder Bildschirm ausgebildet sein, die beispielsweise an einer der Seitenflächen des Saugkopfes (2) angeordnet vorliegt. Es kann im Sinne der Erfindung auch bevorzugt sein, dass die Anzeige (4) als optische Anzeige (4) ausgebildet ist und beispielsweise ein einfarbiges Blinklicht abgibt, wobei unterschiedliche Blinkfrequenzen für unterschiedliche Bohrlochreinigungseffizienzen stehen.

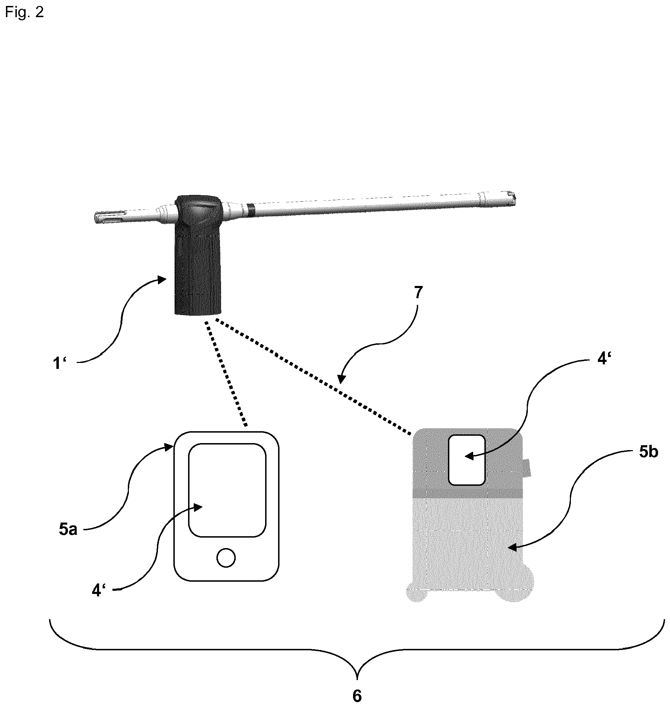

Figur 2 zeigt eine Ansicht einer bevorzugten Ausgestaltung der Erfindung, insbesondere eines vorgeschlagenen Systems (6). Das System (6) umfasst eine Hohlbohrervorrichtung (1'), wobei das Referenzzeichen 1' bedeutet, dass eine Hohlbohrervorrichtung (1') des Systems (6) nicht selbst eine Anzeigenvorrichtung (4) umfassen muss. Die Hohlbohrervorrichtung (1') umfasst wie die vorgeschlagene Hohlbohrervorrichtung (1) einen Saugkopf (2), der Sensoren zur Ermittlung von Druckverhältnissen im Saugkopf (2) umfasst. Ferner umfasst das System (6) mindestens ein externes Gerät (5). Das in Figur 2 dargestellte Ausführungsbeispiel des Systems (6) zeigt zwei externe Geräte (5), wobei ein erstes externes Gerät (5a) von einer mobilen Kommunikationsvorrichtung gebildet wird und ein zweites externes Gerät (5b) von der Staubsabsaugevorrichtung gebildet wird, mit der die Hohlbohrervorrichtung (1 oder 1') zusammenwirkt. Die Anzeige der ermittelten Druckverhältnisse im Saugkopf (2) erfolgt im Kontext des vorgeschlagenen Systems (6) vorzugsweise auf einer Anzeigenvorrichtung (4'), wobei das Bezugszeichen 4' andeutet, dass es sich um eine Anzeigenvorrichtung eines externen Geräts (5) handelt. Beispielsweise kann eine Anzeigenvorrichtung (4') an einer Oberseite der Staubabsaugevorrichtung (5b) angeordnet sein, an der die Hohlbohrervorrichtung (1') angeschlossen ist.

Zwischen der Hohlbohrervorrichtung (1') und den externen Geräten (5) besteht vorzugsweise eine Kommunikationsverbindung (7), die in einer besonders bevorzugten Ausgestaltung der Erfindung drahtlos ausgestaltet ist. Es ist im Sinne der Erfindung ganz besonders bevorzugt, dass es sich bei der Kommunikationsverbindung (7) um eine Bluetooth- und/oder eine WIFI/WLAN-Verbindung handelt.

### Bezugszeichenliste

- 1: Hohlbohrervorrichtung
- 2: Saugkopf
- 3: Bohrwerkzeug
- 4: Anzeige
- 5: externes Gerät
- 6: System
- 7: Kommunikationsverbindung

## Patentansprüche

1. Hohlbohrervorrichtung (1) zur Erzeugung eines Bohrlochs, wobei die Hohlbohrervorrichtung (1) einen Saugkopf (2) zur Verbindung der Hohlbohrervorrichtung (1) mit einer Staubabsaugevorrichtung umfasst,
**dadurch gekennzeichnet, dass**
die Hohlbohrervorrichtung (1) eine Anzeige (4) umfasst, wobei die Anzeige (4) dazu eingerichtet, einen Gütegrad einer Bohrlochreinigung anzuzeigen, wobei die Hohlbohrervorrichtung (1) einen Sensor zur Ermittlung von Druckverhältnissen im Saugkopf (2) umfasst und die Anzeige (4) den Gütegrad der Bohrlochreinigung in Abhängigkeit von ermittelten Druckwerten im Saugkopf (2) anzeigt.

2. Hohlbohrervorrichtung (1) nach Anspruch 1,
**dadurch gekennzeichnet, dass**
die Anzeige (4) auf einer Oberseite des Saugkopfes (2) angeordnet vorliegt.

3. Hohlbohrervorrichtung (1) nach Anspruch 1 oder 2,
**dadurch gekennzeichnet, dass**
die Anzeige (4) eine optische Anzeige (4) ist.

4. Hohlbohrervorrichtung (1) nach einem oder mehreren der vorhergehenden Ansprüche,
**dadurch gekennzeichnet, dass**
unterschiedliche Gütegrade der Bohrlochreinigung mit unterschiedlichen Farben angezeigt werden.

5. System umfassend eine Hohlbohrervorrichtung (1') mit Saugkopf (2) und mindestens ein externes Gerät (5)
**dadurch gekennzeichnet, dass**
das externe Gerät (5) eine Anzeige (4') umfasst, wobei die Anzeige (4') dazu eingerichtet ist, einen Gütegrad einer Bohrlochreinigung anzuzeigen, wobei die Hohlbohrervorrichtung (1') einen Sensor zur Ermittlung von Druckverhältnissen im Saugkopf (2) umfasst und die Anzeige (4') den Gütegrad der Bohrlochreinigung in Abhängigkeit von ermittelten Druckwerten im Saugkopf (2) anzeigt.

6. Verfahren zur Bestimmung und Anzeige eines Gütegrades für eine Bohrlochreinigung
**umfassend die folgenden Schritte:**
a) Bereitstellung einer Hohlbohrervorrichtung (1), wobei die Hohlbohrervorrichtung (1) einen Sensor zur Ermittlung eines Drucks in einem Saugkopf (2) umfasst,
b) Messung des Druck innerhalb des Saugkopfs (2),
c) Anzeige eines Gütegrades einer Bohrlochreinigung durch eine Anzeige (4).

7. Verfahren nach Anspruch 6
**dadurch gekennzeichnet, dass**
die Anzeige (4) Bestandteil der Hohlbohrervorrichtung (1) ist.

8. Verfahren nach Anspruch 6
**dadurch gekennzeichnet, dass**
die Anzeige (4') Bestandteil eines externen Geräts (5) ist.
